# EUROPÄISCHE PATENTSCHRIFT

(11) **EP 2 493 948 B1**
(45) Veröffentlichungstag und Bekanntmachung des Hinweises auf die Patenterteilung: **02.10.2013**
(21) Anmeldenummer: 10770534.5
(22) Anmeldetag: 26.10.2010
(51) Int. Cl.: C08G 18/24, C08G 18/28, C08G 18/79, B01J 31/02

(54) **VERWENDUNG VON ZINN-KATALYSATOREN FÜR DIE HERSTELLUNG VON POLYURETHANBESCHICHTUNGEN**
USE OF TIN CATALYSTS FOR THE PREPARATION OF POLYURETHANE COATINGS
UTILISATION DE CATALYSEURS D'ÉTAIN POUR LA PRÉPARATION DE REVÊTEMENTS DE POLYURÉTHANE

(30) Priorität: 30.10.2009 DE 102009051445
(43) Veröffentlichungstag der Anmeldung: 05.09.2012
(73) Patentinhaber: Bayer Intellectual Property GmbH, 40789 Monheim (DE)
(72) Erfinder: RICHTER, Frank, 51373 Leverkusen (DE); PIRES, Raul, 50670 Köln (DE); REITER, Stephan, 40764 Langenfeld (DE); KRAUSE, Jens, 51375 Leverkusen (DE); JURKSCHAT, Klaus, 44379 Dortmund (DE); IOVKOVA, Ljuba, 44225 Dortmund (DE); SCHÜRMANN, Markus, 45665 Recklinghausen (DE); BRADTMÖLLER, Gerrit, 46286 Dorsten (DE)
(74) Vertreter: BIP Patents
(86) Internationale Anmeldenummer: PCT/EP2010/066104
(87) Internationale Veröffentlichungsnummer: WO 2011/051247

(56) Entgegenhaltungen:
- WO-A1-2007/075561
- DD-A1- 242 617
- DATABASE WPI Week 200245 Thomson Scientific, London, GB; AN 2002-420225 XP002617101, & JP 2002 037834 A (DOKURITSU GYOSEI HOJIN SANGYO GIJUTSU SO) 6. Februar 2002 (2002-02-06)

## Beschreibung

Die Erfindung betrifft die Verwendung spezieller Katalysatoren zur Herstellung von Polyisocyanat-Polyadditionsprodukten, insbesondere für den Beschichtungsbereich.

Polyurethanbeschichtungen sind seit langem bekannt und werden in vielen Bereichen eingesetzt. Sie werden in der Regel aus einer Polyisocyanat- und einer Hydroxylkomponente durch Vermischen unmittelbar vor der Applikation hergestellt (2 K Technologie). Für lichtechte Beschichtungen werden in der Regel Polyisocyanatkomponenten auf Basis aliphatischer Polyisocyanate eingesetzt, die im Vergleich zu Produkten mit aromatisch gebundenen Isocyanatgruppen deutlich langsamer mit der Hydroxylkomponente in Reaktion treten. In den meisten Fällen muss daher die Reaktion katalysiert werden. Zusätzlich wird, wo das möglich ist, zur weiteren Beschleunigung der Reaktion erwärmt. Als Katalysatoren haben sich dabei organische Zinnverbindungen, insbes. Dibutylzinndilaurat (DBTL) bewährt. Diese haben den generellen Nachteil eines ungünstigen ökologischen Profils, was u. a. bereits dazu geführt hat, die Stoffklasse der Oranozinnverbindungen aus Schiffsanstrichstoffen, denen sie als Biozid beigemengt wurden, vollständig zu verbannen.

Ein genereller Nachteil der 2 K Technologie ist es, dass die NCO-OH-Reaktion bereits bei Zimmertemperatur langsam, katalysiert deutlich schneller abläuft, was dazu führt, dass für die Verarbeitung der fertig formulierten Mischung eines derartigen 2 K Systems nur ein zeitlich enges Verarbeitungsfenster zur Verfügung steht (Topfzeit), welches durch die Anwesenheit des Katalysators weiter verkürzt wird.

Es hat deshalb nicht an Versuchen gefehlt, Katalysatoren zu entwickeln, die die Vernetzungsreaktion bei der Bereitung der 2 K Mischung kaum, nach Applikation aber deutlich beschleunigen (latente Katalysatoren).

Eine insbesondere im Giesselastomerbereich verwendete Klasse von latenten Katalysatoren sind Organoquecksilberverbindungen. Der prominenteste Vertreter ist hierbei das Phenylquecksilberneodecanoat (Handelsbezeichnungen: Thorcat 535, Cocure 44). U.a. wegen der Toxikologie der Quecksilberverbindungen spielen sie in der Beschichtungstechnologie jedoch keine Rolle.

Hier hat man sich eher auf chemisch, z.B. durch (Luft-)Feuchtigkeit und/oder -sauerstoff aktivierbare (vgl. WO 2007/075561, Organometallics 1994 (13) 1034-1038, DE 69521682) sowie photochemisch aktivierbare Systeme konzentriert (vgl. US 4549945).

Nachteil der beiden letztgenannten Systeme des Standes der Technik ist, dass einerseits eine definierte, reproduzierbare Migration von (Luft-)Feuchtigkeit bzw. -sauerstoff unabhängig von der Beschichtungsrezeptur (Vernetzungsgrad, Glasübergangstemperatur, Lösemittelgehalt etc.) sowie den Umgebungsbedingungen schlecht gewährleistet werden kann und andererseits, insbesondere bei pigmentierten Systemen, dem Einsatz von Strahlungsquellen zur Aktivierung des photolatenten Katalysators Grenzen gesetzt sind.

Aufgabe der vorliegenden Erfindung war es daher, Systeme zur Verfügung zu stellen, mit denen es möglich ist, Beschichtungen auf Basis von Polyisocyanat-Polyadditionsprodukten herzustellen, die bei Herstellen der 2 K Mischung (in der Regel bei Zimmertemperatur) eine gegenüber dem unkatalysierten System nicht bzw. nur geringfügig verringerte Topfzeit aufweisen, nach Applikation auf dem Substrat aber durch Temperaturerhöhung beschleunigt aushärten und eine Beschichtung liefern, die das für Polyurethansysteme bekannte, hohe Qualitätsniveau aufweist. Das System und der Katalysator sollten zudem frei von toxischen Schwermetallen wie Cadmium, Quecksilber, Blei sowie Organozinnverbindungen sein, wobei als Organozinnverbindungen definitionsgemäss Spezies mit mindestens einer Sn-C-Bindung verstanden werden.

Diese Aufgabe konnte überraschenderweise durch den Einsatz spezieller anorganischer Sn(IV)-Katalysatoren gelöst werden.

Gegenstand der Erfindung sind Polyisocyanat-Polyadditionsprodukte erhältlich aus
a) mindestens einem aliphatischen, cycloaliphatischen, araliphatischen und/oder aromatischen Polyisocyanat
b) mindestens einer NCO-reaktiven Verbindung
c) mindestens einem thermolatenten anorganischen Zinn-enthaltenden Katalysator
d) gegebenenfalls weiteren von c) verschiedenen Katalysatoren und/oder Aktivatoren
e) gegebenenfalls Füllstoffen, Pigmenten, Additiven, Verdickern, Entschäumern und/oder anderen Hilfs- und Zusatzstoffen,
wobei das Verhältnis des Gewichts des Zinns aus Komponente c) und des Gewichts der Komponente a) weniger als 3000 ppm beträgt, wenn Komponente a) ein aliphatisches Polyisocyanat ist und weniger als 95 ppm beträgt, wenn Komponente a) ein aromatisches Polyisocyanat ist, dadurch gekennzeichnet, dass als thermolatente Katalysatoren zyklische Zinnverbindungen der Formel I, II oder III eingesetzt werden: 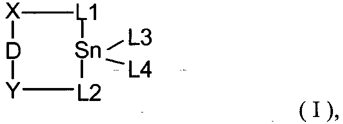 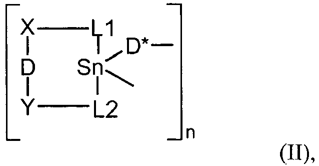 mit n > 1, 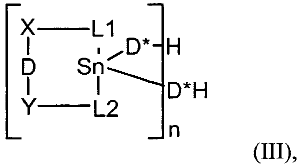 mit n > 1, wobei gilt:
D steht für -O-, -S- oder -N(R1)-
wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 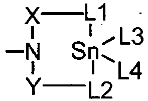 steht,
oder R1 und L3 zusammen für -Z-L5- stehen;
D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)-oder ortho-Arylenresten der Formeln 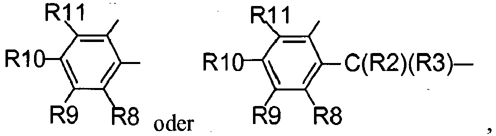 wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, -SC(=S)-, -OS(=O)₂O-, -OS(=O)₂- oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, -OC(=O)R14, -SR15, -OC(=S)R16, -OS(=O)₂OR17, -OS(=O)₂R18 oder -NR19R20, oder L3 und L4 zusammen stehen für -L1-X-D-Y-L2-,
wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

Bevorzugt handelt es sich bei D um -N(R1)-.

Bevorzugt handelt es sich bei R1 um Wasserstoff oder einen Alkyl-, Aralkyl-, Alkaryl- oder Arylrest mit bis zu 20 C-Atomen oder um den Rest 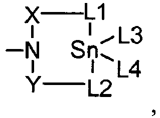 besonders bevorzugt um Wasserstoff oder einen Alkyl-, Aralkyl-, Alkaryl- oder Arylrest mit bis zu 12 C-Atomen oder um den Rest 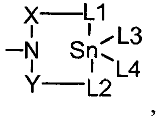 ganz besonders bevorzugt um Wasserstoff oder einen Methyl-, Ethyl-, Propyl-, Butyl-, Hexyl- oder Octyl-Rest, wobei Propyl-, Butyl-, Hexyl-, und Octyl für alle isomeren Propyl-, Butyl-, Hexyl- sowie Octylreste stehen, um Ph-, CH₃Ph- oder um den Rest

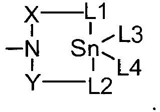

Bevorzugt handelt es sich bei D* um -O-.

Bevorzugt handelt es sich bei X, Y und Z um die Alkylenreste -C(R2)(R3)-, -C(R2)(R3)-C(R4)(R5)- oder den ortho-Arylenrest

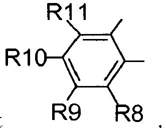

Bevorzugt handelt es sich bei R2 bis R7 um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 8 C-Atomen, ganz besonders bevorzugt um Wasserstoff oder Alkylreste mit bis zu 8 C-Atomen, noch weiter bevorzugt um Wasserstoff oder Methyl.

Bevorzugt handelt es sich bei R8 bis R11 um Wasserstoff oder Alkylreste mit bis zu 8 C-Atomen, besonders bevorzugt um Wasserstoff oder Methyl.

Bevorzugt handelt es sich bei L1, L2 und L5 um -NR12-, -S-, -SC(=S)-, -SC(=O)-, -OC(=S)-, -O-, oder -OC(=O)-, besonders bevorzugt um -O-, oder -OC(=O)-.

Bevorzugt handelt es sich bei R12 um Wasserstoff oder einen Alkyl-, Aralkyl-, Alkaryl- oder Arylrest mit bis zu 20 C-Atomen, besonders bevorzugt um Wasserstoff oder einen Alkyl-, Aralkyl-, Alkaryl- oder Arylrest mit bis zu 12 C-Atomen, ganz besonders bevorzugt um Wasserstoff oder einen Methyl-, Ethyl-, Propyl-, Butyl-, Hexyl-oder Octyl-Rest, wobei Propyl-, Butyl-, Hexyl-, und Octyl für alle isomeren Propyl-, Butyl-, Hexyl- sowie Octylreste stehen.

Bevorzugt handelt es sich bei L3 und L4 um -Hal, -OH, -SH, -OR13, -OC(=O)R14, wobei die Reste R13 und R14 bis zu 20 Kohlenstoffatome, bevorzugt bis zu 12 Kohlenstoffatome aufweisen. Besonders bevorzugt handelt es sich bei L3 und L4 um Cl-, MeO-, EtO-, PrO-, BuO-, HexO-, OctO-, PhO-, Formiat, Acetat, Propanoat, Butanoat, Pentanoat, Hexanoat, Octanoat, Laurat, Lactat oder Benzoat, wobei Pr, Bu, Hex und Oct für alle isomeren Propyl-, Butyl-, Hexyl- sowie Octylreste stehen, noch weiter bevorzugt um Cl-, MeO-, EtO-, PrO-, BuO-, HexO-, OctO-, PhO-, Hexanoat, Laurat, oder Benzoat, wobei Pr, Bu, Hex und Oct für alle isomeren Propyl-, Butyl-, Hexyl- sowie Octylreste stehen.

Bevorzugt handelt es bei R15 bis R20 um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 12 C-Atomen, ganz besonders bevorzugt um Wasserstoff, Methyl-, Ethyl-, Propyl-, Butyl-, Hexyl-, oder Octyl-Reste, wobei Propyl-, Butyl-, Hexyl-, und Octyl für alle isomeren Propyl-, Butyl-, Hexyl- sowie Octylreste stehen.

Die Einheiten L1-X, L2-Y und L5-Z stehen bevorzugt für -CH₂CH₂O-, -CH₂CH(Me)O-, -CH(Me)CH₂O-, -CH₂C(Me)₂O-, -C(Me)₂ CH₂O- oder -CH₂C(=O)O-.

Die Einheit L1-X-D-Y-L2 steht bevorzugt für: HN[CH₂CH₂O-]₂, HN[CH₂CH(Me)O-]₂, HN[CH₂CH(Me)O-][CH(Me)CH₂O-], HN[CH₂C(Me)₂O-]₂, HN[CH₂C(Me)₂O-][C(Me)₂CH₂O-], HN[CH₂C(=O)O-]₂, MeN[CH₂CH₂O-]₂, MeN[CH₂CH(Me)O-]₂, MeN[CH₂CH(Me)O-][CH(Me)CH₂O-], MeN[CH₂C(Me)₂O-]₂, MeN[CH₂C(Me)₂O-][C(Me)₂CH₂O-], MeN[CH₂C(=O)O-]₂, EtN[CH₂CH₂O-]₂, EtN[CH₂CH(Me)O-]₂, EtN[CH₂CH(Me)O-][CH(Me)CH₂O-], EtN[CH₂C(Me)₂O-]₂, EtN[CH₂C(Me)₂O-][C(Me)₂CH₂O-], EtN[CH₂C(=O)O-]₂, PrN[CH₂CH₂O-]₂, PrN[CH₂CH(Me)O-]₂, PrN[CH₂CH(Me)O-][CH(Me)CH₂O-], PrN[CH₂C(Me)₂O-]₂, PrN[CH₂C(Me)₂O-][C(Me)₂CH₂O-], PrN[CH₂C(=O)O-]₂, BuN[CH₂CH₂O-]₂, BuN[CH₂CH(Me)O-]₂, BuN[CH₂CH(Me)O-][CH(Me)CH₂O-], BuN[CH₂C(Me)₂O-]₂, BuN[CH₂C(Me)₂O-][C(Me)₂CH₂O-], BuN[CH₂C(=O)O-]₂, HexN[CH₂CH₂O-]₂, HexN[CH₂CH(Me)O-]₂, HexN[CH₂CH(Me)O-][CH(Me)CH₂O-], HexN[CHC(Me)₂O-]₂, HexN[CH₂C(Me)₂O-][C(Me)₂CH₂O-], HexN[CH₂C(=O)O-]₂, OctN[CH₂CH₂O-]₂, OctN[CH₂CH(Me)O-]₂, OctN[CH₂CH(Me)O-][CH(Me)CH₂O-], OctN[CH₂C(Me)₂O-]₂, OctN[CH₂C(Me)₂O-][C(Me)₂CH₂O-], OctN[CH₂C(=O)O-]₂, wobei Pr, Bu, Hex und Oct für alle isomeren Propyl-, Butyl- sowie Octylreste stehen können, PhN[CH₂CH₂O-]₂, PhN[CH₂CH(Me)O-]₂, PhN[CH₂CH(Me)O-][CH(Me)CH₂O-], PhN[CH₂C(Me)₂O-]₂, PhN[CH₂C(Me)₂O-][C(Me)₂CH₂O-], PhN[CH₂C(=O)O-]₂,

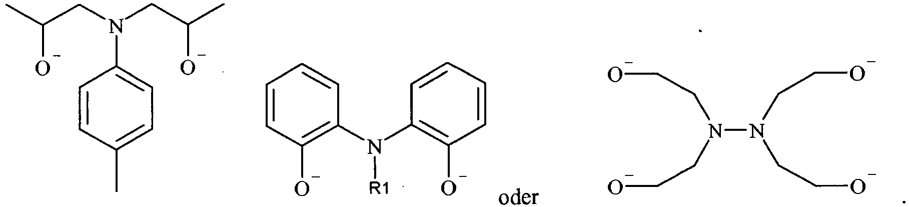

Die Zinnverbindungen - wie dem Fachmann bekannt ist - neigen zur Oligomerisierung, so dass häufig mehrkernige Zinnverbindungen oder Gemische aus ein- und mehrkernigen Zinnverbindungen vorliegen. In den mehrkernigen Zinnverbindungen sind die Zinnatome bevorzugt über Sauerstoffatome ('Sauerstoffbrücken', *vide intra*) miteinander verbunden. Typische oligomere Komplexe (mehrkernige Zinnverbindungen) entstehen z.B. durch Kondensation der Zinnatome über Sauerstoff oder Schwefel, z.B. 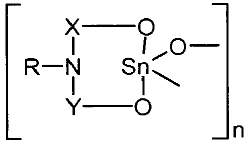 mit n > 1 (vgl. Formel II). Bei niedrigen Oligomerisierungsgraden findet man häufig cyclische, bei höheren Oligomerisierungsgraden lineare Oligomere mit OH- bzw. SH-Endgruppen (vgl. Formel III).

Ein weiterer Gegenstand der Erfindung ist ein Verfahren zur Herstellung der erfindungsgemäßen Polyisocyanat-Polyadditionsprodukte wobei
a) mindestens ein aliphatisches, cycloaliphatisches, araliphatisches und/oder aromatisches Polyisocyanat mit
b) mindestens einer NCO-reaktiven Verbindung in Gegenwart
c) mindestens eines thermolatenten anorganischen Zinn-enthaltenden Katalysators,
d) gegebenenfalls weiteren von c) verschiedenen Katalysatoren und/oder Aktivatoren und
e) gegebenenfalls Füllstoffen, Pigmenten, Additiven, Verdickern, Entschäumern und/oder anderen Hilfs- und Zusatzstoffen,
umgesetzt wird, wobei das Verhältnis des Gewichts des Zinns aus Komponente c) und des Gewichts der Komponente a) weniger als 3000 ppm beträgt, wenn Komponente a) ein aliphatisches Polyisocyanat ist und weniger als 95 ppm beträgt, wenn Komponente a) ein aromatisches Polyisocyanat ist, dadurch gekennzeichnet, dass als thermolatente Katalysatoren zyklische Zinnverbindungen der Formel I, II oder III eingesetzt werden: 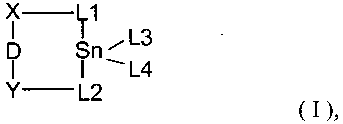 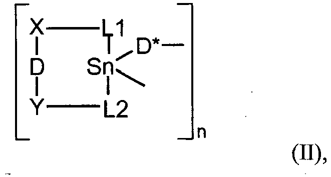 mit n > 1, 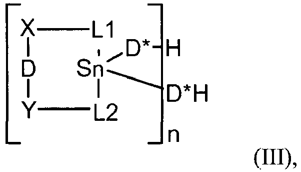 mit n > 1,
wobei für D, D*, Y, X und L1 bis L4 die oben angegebenen Definitionen gelten.

In den Fällen, in denen die Zinnverbindungen Liganden mit freien OH- und/oder NH-Resten aufweisen, kann der Katalysator bei der Polyisocyanat-Polyadditionsreaktion in das Produkt eingebaut werden. Besonderer Vorteil dieser einbaubaren Katalysatoren ist ihr stark reduziertes Fogging-Verhalten, was besonders beim Einsatz von Polyurethanbeschichtungen im Automobilinnenraum wichtig ist.

Die verschiedenen Herstellungsmethoden für die erfindungsgemäß zu verwendenden Zinn(IV)-Verbindungen bzw. ihrer Zinn(II)-Precursoren sind u.a. beschrieben in: J. Organomet. Chem. 2009 694 3184-3189, Chem. Heterocycl. Comp. 2007 43 813-834, Indian J. Chem. 1967 5 643-645 sowie in darin angeführter Literatur.

Eine Reihe zyklischer Zinnverbindungen wurde bereits auch für die Verwendung als Katalysator für das Isocyanat-Polyadditionsverfahren vorgeschlagen, vgl. DD 242617, US 3164557, DE 1111377, US 4430456, GB 899948, US 2008/0277137. Allen diesen vorbeschriebenen Systemen des Standes der Technik ist allerdings gemein, dass es sich ausnahmslos um Sn-II- oder Organo-zinn-IV-verbindungen handelt. Hinzu kommt, dass die den erfindungsgemäßen Katalysatoren äußerst ähnlichen Organozinn-IV-verbindungen mit Alkylgruppen an Stelle L3 und L4 keinerlei Thermolatenz zeigen und die Topfzeit der Formulierung sogar gegenüber dem Standard-Organozinnkatalysator DBTL noch verkürzen (Vergleichsbeispiele 4 bis 5).

Die latenten Katalysatoren können mit weiteren aus dem Stand der Technik bekannten Katalysatoren/Aktivatoren kombiniert werden; zum Beispiel Titan-, Zirkonium-, Bismut-, Zinn(II)-und/oder eisenhaltigen Katalysatoren, wie sie beispielsweise in WO 2005/058996 beschrieben sind. Möglich ist auch eine Zugabe von Aminen oder Amidinen. Darüberhinaus können bei der Polyiso-cyanat-Polyadditionsreaktion auch saure Verbindungen, wie z.B. 2-Ethylhexansäure oder Alkohole zur Reaktionssteuerung zugegeben werden.

Der erfindungsgemäße Katalysator kann über die NCO-reaktive Verbindung (Polyol), in einem Lösungsmittel gelöst oder im Polyisocyanat vorgelöst der Reaktionsmischung zugegeben werden.

Die für die Herstellung von Polyisocyanat-Polyadditionsprodukten, insbesondere Polyurethanen geeigneten Polyisocyanate (a) sind die dem Fachmann an sich bekannten organischen aliphatischen, cycloaliphatischen, araliphatischen und/oder aromatischen Polyisocyanate mit mindestens zwei Isocyanatgruppen pro Molekül sowie Gemische davon. Beispiele für derartige Polyisocyanate sind Di- oder Triisocyanate, wie z.B. Bulandiisocyanat, Pentandiisocyanat, Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) (H₁₂MDI), 3,5,5-Trimethyl-1-isocyanato-3-isocyanatomethylcyclohexan (Isophorondiisocyanat, IPDI), 1,3- sowie 1,4-Bis(isocyanatomethyl)-cyclohexan (H₆XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3-Bis(isocyanatomethyl)benzol (XDI), 3,3'-Dimethyl-4,4'-biphenyldiisocyanat (TODI), 1,4-Paraphenylendiisocyanat (PPDI) sowie Cyclohexyldiisocyanat (CHDI) und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktuereinheiten. Bevorzugt werden Polyisocyanate auf Basis aliphatischer und cycloaliphatischer Diisocyanate eingesetzt.

Die Polyisocyanatkomponente (a) kann in einem geeigneten Lösemittel vorliegen. Geeignete Lösemittel sind solche, die eine ausreichende Löslichkeit der Polyisocyanatkomponente aufweisen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA).

Die Isocyanatkomponente kann darüber hinaus übliche Hilfs- und Zusatzmittel, wie z.B. Rheologieverbesserer (zum Beispiel Ethylencarbonat, Propylencarbonat, dibasische Ester, Zitronensäureester), Stabilisatoren (zum Beispiel Broenstedt- und Lewis-Säuren, wie etwa Salzsäure, Phosphorsäure, Benzoylchlorid, Organomineralsäuren wie Dibutylphosphat, weiterhin Adipinsäure, Äpfelsäure, Bernsteinsäure, Traubensäure oder Zitronensäure), UV-Schutzmittel (zum Beispiel 2,6-Dibutyl-4-methylphenol), Hydrolyseschutzmittel (zum Beispiel sterisch gehinderte Carbodiimide), Emulgatoren sowie Katalysatoren (zum Beispiel Trialkylamine, Diazabicyclooctan, Zinndioctoat, Dibutylzinndilaurat, N-Alkylmorpholin, Blei-, Zink-, Zinn-, Calcium-, Magnesiumoctoat, die entsprechenden Naphthenate und p-Nitrophenolat und/oder auch Quecksilberphenylneodecanoat) und Füllstoffe (zum Beispiel Kreide), gegebenenfalls in das/den später zu bildende/n Polyurethan/Polyhamstoff einbaufähige Farbstoffe (die also über Zerewitinoff-aktive Wasserstoffatome verfügen) und/oder Farbpigmente enthalten.

Als NCO-reaktive Verbindungen (b) können alle dem Fachmann bekannten Verbindungen eingesetzt werden, welche eine mittlere OH- bzw. NH-Funktionalität von mindestens 1,5 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, kurzkettige Polyamine aber auch höhermolekulare Polyhydroxyverbindungen wie Polyetherpolyole, Polyesterpolyole, Polycarbonatpolyole, Polysiloxanpolyole, Polyamine und Polyetherpolyamine sowie Polybutadienpolyole. Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können. Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethyl cyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäureenthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden. Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-butylperoxid.

Bevorzugt handelt es sich bei b) um höhermolekulare Polyhydroxyverbindungen.

Die Komponente (b) kann in einem geeigneten Lösemittel vorliegen. Geeignete Lösemittel sind solche, die eine ausreichende Löslichkeit der Komponente aufweisen. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA). Darüber hinaus können die Lösemittel auch gegenüber Isocyanaten reaktive Gruppen tragen. Beispiele für solche Reaktivlösemittel sind solche, die eine mittlere Funktionalität gegenüber Isocyanaten reaktiver Gruppen von mindestens 1,8 aufweisen. Dies können beispielsweise niedermolekulare Diole (z.B. 1,2-Ethandiol, 1,3-bzw. 1,2-Propandiol, 1,4-Butandiol), Triole (z.B. Glycerin, Trimethylolpropan), aber auch niedermolekulare Diamine, wie zum Beispiel Polyasparaginsäureester, sein.

Das Verfahren zur Herstellung der Polyisocyanat-Polyadditionsprodukte kann in Gegenwart üblicher Rheologieverbesserer, Stabilisatoren, UV-Schutzmittel, Katalyatoren, Hydrolyseschutzmittel, Emulgatoren, Füllstoffe, gegebenenfalls einbaufähiger Farbstoffe (die also über Zerewitinoff-aktive Wasserstoffatome verfügen) und/oder Farbpigmente durchgeführt werden. Möglich ist auch eine Zugabe von Zeolithen.

Bevorzugte Hilfs- und Zusatzmittel sind Treibmittel, Füllstoffe, Kreide, Ruß oder Zeolithe, Flammschutzmittel, Farbpasten, Wasser, Mikrobenschutzmittel, Fließverbesserer, Thixotropiermittel, Oberflächenmodifizierungsmittel und Verzögerer bei der Herstellung der Polyisocyanat-Polyadditionsprodukte. Weitere Hilfs- und Zusatzstoffe umfassen Entschäumer, Emulgatoren, Schaumstabilisatoren und Zellregler. Eine Übersicht ist in G. Oertel, Polyurethane Handbook, 2nd Edition, Carl Hanser Verlag, München, 1994, Kap. 3.4., enthalten.

Die erfindungsgemäßen Systeme können in Lösung oder aus der Schmelze sowie bei Pulverlacken in fester Form mit Methoden wie Streichen, Rollen, Gießen, Spritzen, Tauchen, Wirbelschichtverfahren oder durch elektrostatische Sprühverfahren auf dem zu beschichtenden Gegenstand appliziert werden. Als Substrate eigenen sich beispielsweise Werkstoffe wie Metalle, Holz, Kunststoffe oder Keramiken.

Ein weiterer Gegenstand der Erfindung sind daher Beschichtungsmittel enthaltend die erfindungsgemäßen Polyisocyanat-Polyadditionsprodukte, ebenso wie die daraus erhältlichen Beschichtungen und die mit diesen Beschichtungen beschichteten Substrate.

### Beispiele

Die Erfindung soll anhand der nachfolgenden Beispiele näher erläutert werden. In den Beispielen sind alle Prozentangaben, soweit nicht anders vermerkt, als Gewichtsprozent zu verstehen. Alle Reaktionen wurden unter einer trockenen Stickstoffatmosphäre durchgeführt. Die Katalysatoren aus Tabelle 1 wurden nach Standard-Literaturvorschriften erhalten (vgl. Chem. Heterocycl. Comp. 2007 43 813-834 und darin zitierte Literatur), DBTL wurde von der Fa. Kever Technologie, Ratingen, D, bezogen.

Die Katalysatormenge wurde zur besseren Vergleichbarkeit der Aktivität der erfindungsgemäß einzusetzenden Katalysatoren und der Katalysatoren aus den Vergleichsbeispielen als mg Sn je kg Polyisocyanathärter (ppm) angegeben, wobei als Polyisocyanathärter in der Regel das Handelsprodukt Desmodur N 3300 der Fa. Bayer MaterialScience AG, Leverkusen, D, und als Modellverbindung für die Isocyanat-reaktive Komponente (,Poly'ol) genau ein Äquivalent 2-Ethylhexanol (bezogen auf die freien Isocyanatgruppen des Polyisocyanathärters, Produkt der Fa. Aldrich, Taufkirchen, D) eingesetzt wurden. Durch Zugabe von 10% (bezogen auf Desmodur N 3300) n-Butylacetat wurde sichergestellt, über den gesamten Reaktionsverlauf hinreichend niedrigviskose Proben ziehen zu können, die eine genaue Erfassung des NCO-Gehaltes mittels Titration gemäß DIN 53 185 gestatten. Der zu Beginn der Reaktion ohne jedwede NCO-OH-Reaktion berechnete NCO-Gehalt beläuft sich dabei auf 12,2 %, Versuche bei denen der NCO-Gehalt auf 0,1 % gefallen war, wurden beendet.

Vergleichsversuch 1 bei konstant 30°C zeigt die Abnahme des NCO-Gehaltes der Mischung im unkatalysierten Fall (Tabelle 2, Versuch 1). Um einen Vergleich der Beschleunigung der Reaktion bei 60°C bzw. 80°C 'Aushärtungstemperatur' zu ermöglichen, wurden darüber hinaus Versuche bei anfangs konstant 30°C (2h) und anschließend 60 bzw. 80°C zunächst ebenfalls unkatalysiert durchgeführt (Tabelle 2, Versuch 2 und 3). Vergleichsversuche 4 bis 6 belegen die nicht vorhandene Thermolatenz von strukturell mit den erfindungsgemäßen Katalysatoren eng verwandten Organozinnverbindungen. Den erfindungsgemäßen Beispielen 7 bis 15 ist zu entnehmen, dass mit der beanspruchten Klasse zyklischer Zinn-IV-verbindungen die NCO-OH-Reaktion bei 30°C kaum beschleunigt wird, je nach Katalysatortyp und -konzentration durch Temperaturerhöhung auf 60°C bzw. 80°C eine an die jeweilige Anforderung maßgeschneiderte Reaktivität zu erzielen ist. So ist beispielsweise Katalysator 4 (2,2-Diisopropoxy-6-methyl-1,3,6,2-dioxazastannocan, Beispiele 8 und 9) bei konstanter Konzentration bei 60°C fast noch inaktiv, wohingegen die Reaktion bei 80°C gegenüber dem nicht katalysierten Vergleichsversuch 3 signifikant beschleunigt wird.

**Tabelle 1 Übersiclit zu den verwendeten Katalysatoren**

| (DBTL sowie Kat. 1 und 2 Vergleich, Kat. 3 bis 10 erfindungsgemäß) | | | | |
|---|---|---|---|---|
| **Katalysator** | **Strukturformel** | **Summenformel** | **Molgewicht [g/mol]** | **Sn-Gehalt** |
| **DBTL (Vergleich)** | 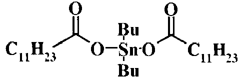 | C32H64O4Sn | 631,55 | 18,79% |
| **Kat. 1 (Vergleich)** | 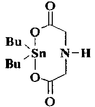 | C12H23NO4Sn | 364,01 | 32,61% |
| **Kat. 2 (Vergleich)** | 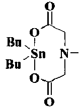 | C13H25NO4Sn | 378,04 | 31,40% |
| **Kat. 3 (erfind.-gemäß)** | 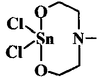 | C5H11C12NO2Sn | 306,74 | 38,69% |
| **Kat. 4 (erfind.-gemäß)** | 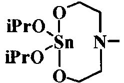 | C11H25NO4Sn | 354,02 | 33,53% |
| **Kat. 5 (erfind.-gemäß)** | 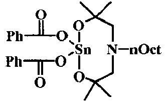 | C30H43NO6Sn | 632,37 | 18,77% |
| **Kat. 6 (erfind.-gemäß)** | 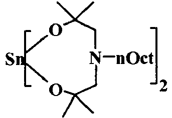 | C32H66N2O4Sn | 661,58 | 17,94% |
| **Kat. 7 (erfind.-gemäß)** | 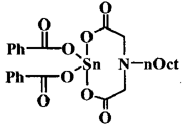 | C26H31NO8Sn | 604,23 | 19,64% |
| **Kat. 8 (erfind.-gemäß)** | 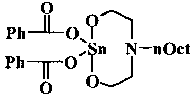 | C26H35NO6Sn | 576,26 | 20,60% |
| **Kat. 9 (erfind.-gemäß)** | 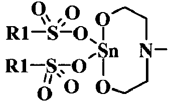 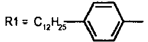 | C41H69NO8S2Sn | 886,83 | 13,38% |

**Tabelle 2 Übersicht über die durchgeführten Versuche (Beispiel 1 - 6:Vergleichsbeispiele, Beispiele 7 bis 15: erfindungsgemäß)**

| **Bsp. -Nr.** | **Kat** | **Kat.-konz. ¹⁾** | **NCO-Gehalt der Mischung nach [hh: mm]** | | | | | | | | | |
|---|---|---|---|---|---|---|---|---|---|---|---|---|
| | | | **00:30** | **1:00** | **1:30** | **2:00** | **2:10** | **2:20** | **2:30** | **3:00** | **3:30** | **4:00** |
| 1 | ohne | 0²⁾ | 11,9 | 11,6 | 11,5 | 11,3 | 11,2 | 11,0 | 10,9 | 10,8 | 10,6 | 10,4 |
| 2 | ohne | 0³⁾ | 11,9 | 11,7 | 11,6 | 11,4 | 11,2 | 10,8 | 10,5 | 9,0 | 7,6 | 6,6 |
| 3 | ohne | 0⁴⁾ | 11,9 | 11,8 | 11,7 | 11,7 | 11,6 | 10,7 | 8,8 | 5,3 | 4,0 | 2,7 |
| 4 | DBTL | 21³⁾ | 7,9 | 6,4 | 5,9 | 5,3 | 5,0 | 4,2 | 2,7 | 1,8 | 1,3 | 1,1 |
| 5 | Kat. 1 | 23³⁾ | 6,8 | 4,8 | 3,5 | 2,5 | 1,8 | 1,1 | 0,3 | 0,1 | | |
| 6 | Kat. 2 | 22³⁾ | 8,9 | 7,1 | 5,7 | 4,7 | 4,1 | 1,8 | 0,9 | 0,3 | 0,2 | 0,1 |
| 7 | Kat. 3 | 11³⁾ | 11,7 | 11,5 | 11,2 | 10,6 | 9,8 | 8,5 | 7,1 | 4,5 | 2,7 | 2,0 |
| 8 | Kat. 4 | 23³⁾ | 11,9 | 11,6 | 11,4 | 11,3 | 9,8 | 9,4 | 9,2 | 7,8 | 6,1 | 4,3 |
| 9 | Kat. 4 | 23⁴⁾ | 11,7 | 11,6 | 11,5 | 11,4 | 11,0 | 9,9 | 7,0 | 2,4 | 1,4 | 1,0 |
| 10 | Kat. 5 | 60³⁾ | 11,7 | 11,2 | 10,8 | 10,4 | 10,3 | 9,9 | 8,9 | 5,9 | 4,2 | 2,9 |
| 11 | Kat. 6 | 20³⁾ | 12,0 | 11,6 | 11,5 | 11,1 | 10,7 | 9,6 | 9,1 | 7,4 | 5,9 | 4,1 |
| 12 | Kat. 7 | 20³⁾ | 11,6 | 11,2 | 10,9 | 10,7 | 10,6 | 9,6 | 8,9 | 6,6 | 4,8 | 4,1 |
| 13 | Kat. 8 | 20³⁾ | 11,8 | 11,7 | 11,5 | 11,2 | 11,2 | 10,9 | 104 | 7,6 | 6,7 | 5,8 |
| 14 | Kat. 8 | 60³⁾ | 11,7 | 11,6 | 11,5 | 11,1 | 10,7 | 10,3 | 9,6 | 6,8 | 5,8 | 4,6 |
| 15 | Kat. 9 | 21⁴⁾ | 11,7 | 11,6 | 11,5 | 11,4 | 11,0 | 10,3 | 9,8 | 4,2 | 2,2 | 1,4 |

| | | | | | | | | | | | | |
|---|---|---|---|---|---|---|---|---|---|---|---|---|
| ¹⁾ Sn [ppm] auf Polyisocyanathärter ²⁾ konstant 30°C ³⁾ erste 2 h 30°C, dann 60°C ⁴⁾ erste 2 h 30°C, dann 80°C | | | | | | | | | | | | |

## Patentansprüche

1. Polyisocyanat-Polyadditionsprodukte erhältlich aus
a) mindestens einem aliphatischen, cycloaliphatischen, araliphatischen und/oder aromatischen Polyisocyanat
b) mindestens einer NCO-reaktiven Verbindung
c) mindestens einem thermolatenten anorganischen Zinn-enthaltenden Katalysator
d) gegebenenfalls weiteren von c) verschiedenen Katalysatoren und/oder Aktivatoren
e) gegebenenfalls Füllstoffen, Pigmenten, Additiven, Verdickern, Entschäumern und/oder anderen Hilfs- und Zusatzstoffen,
wobei das Verhältnis des Gewichts des Zinns aus Komponente c) und des Gewichts der Komponente a) weniger als 3000 ppm beträgt, wenn Komponente a) ein aliphatisches Polyisocyanat ist und weniger als 95 ppm beträgt, wenn Komponente a) ein aromatisches Polyisocyanat ist,
**dadurch gekennzeichnet, dass** als thermolatente Katalysatoren zyklische Zinnverbindungen der Formel I, II oder III eingesetzt werden: 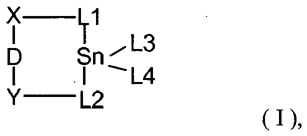 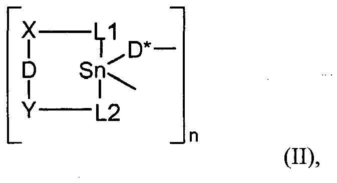 mit n > 1, 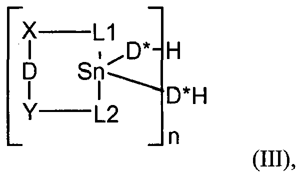 mit > 1, wobei gilt:
D steht für -O-, -S- oder -N(R1)-
wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 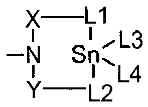 steht, oder R1 und L3 zusammen für -Z-L5- stehen;
D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)-
oder ortho-Arylenresten der Formeln 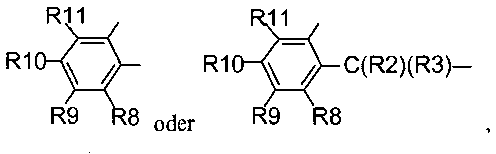 wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, -SC(=S)-, -OS(=O)₂O-, -OS(=O)₂- oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, -OC(=O)R14, -SR15, -OC(=S)R16, -OS(=O)₂OR17, -OS(=O)₂R18 oder -NR19R20, oder L3 und L4 zusammen stehen für -L1-X-D-Y-L2-,
wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

2. Polyisocyanat-Polyadditionsprodukte gemäß Anspruch 1, wobei D -N(R1)- ist. und R1 Wasserstoff oder ein Alkyl-, Aralkyl-, Alkaryl- oder Arylrest mit bis zu 20 C-Atomen ist
oder der Rest 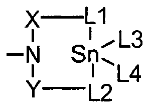 ist.

3. Polyisocyanat-Polyadditionsprodukte gemäß Anspruch 2, wobei R1 Wasserstoff oder ein Methyl-, Ethyl-, Propyl-, Butyl-, Hexyl-, Octyl-, Ph-, oder CH₃Ph-Rest oder der Rest 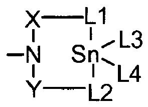 ist und wobei Propyl-, Butyl-, Hexyl-, und Octyl für alle isomeren Propyl-, Butyl-, Hexyl- sowie Octylreste stehen.

4. Polyisocyanat-Polyadditionsprodukte gemäß einem der Ansprüche 1 bis 3, wobei D* -O-ist.

5. Polyisocyanat-Polyadditionsprodukte gemäß einem der Ansprüche 1 bis 4, wobei X, Y und Z unabhängig voneinander Alkylenreste der Formel -C(R2)(R3)- oder -C(R2)(R3)-C(R4)(R5)- oder ortho-Arylenreste der Formel 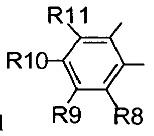 sind und R2 bis R5 unabhängig voneinander Wasserstoff, Alkyl-, Aralkyl-, Alkaryl- oder Arylreste mit bis zu 20 C-Atomen sind und R8 bis R11 unabhängig voneinander Wasserstoff oder Alkylreste mit bis zu 8 C-Atomen sind.

6. Polyisocyanat-Polyadditionsprodukte gemäß Anspruch 5, wobei die Reste R2 bis R5 unabhängig voneinander Wasserstoff oder Alkylreste mit bis zu 8 C-Atomen sind und R8 bis R11 unabhängig voneinander Wasserstoff oder Methyl sind.

7. Polyisocyanat-Polyadditionsprodukte gemäß einem der Ansprüche 1 bis 6, wobei L1, L2 und L5 unabhängig voneinander -N(R12)-, -S-, -SC(=S)-, -SC(=O)-, -OC(=S)-, -O- oder -OC(=O)- sind und R12 Wasserstoff oder ein Alkyl-, Aralkyl-, Alkaryl- oder Arylrest mit bis zu 20 C-Atomen ist.

8. Polyisocyanat-Polyadditionsprodukte gemäß Anspruch 7, wobei L1, L2 und L5 unabhängig voneinander -N(H)-, -N(CH₃)-, -N(C₂H₅)-, -N(C₄H₉)-, -N(C₈H₁₇)-, -N(C₆H₅)-, -S-, -SC(=S)-, -SC(=O)-, -OC(=S)-, -O- oder -OC(=O)- sind.

9. Polyisocyanat-Polyadditionsprodukte gemäß einem der Ansprüche 1 bis 8, wobei L3 und L4 unabhängig voneinander -OH, -SH, -OR13, -Hal oder -OC(=O)R14 sind und die Reste R13 und R14 bis zu 20 Kohlenstoffatome aufweisen.

10. Polyisocyanat-Polyadditionsprodukte gemäß Anspruch 9, wobei L3 und L4 unabhängig voneinander Cl-, MeO-, EtO-, PrO-, BuO-, HexO-, OctO-, PhO-, Formiat, Acetat, Propanoat, Butanoat, Pentanoat, Hexanoat, Octanoat, Laurat, Lactat oder Benzoat sind, wobei Pr, Bu, Hex und Oct für alle isomeren Propyl-, Butyl-, Hexyl- sowie Octylreste stehen.

11. Verfahren zur Herstellung der erfindungsgemäßen Polyisocyanat-Polyadditionsprodukte gemäß Anspruch 1 wobei
a) mindestens ein aliphatisches, cycloaliphatisches, araliphatisches und/oder aromatisches Polyisocyanat mit
b) mindestens einer NCO-reaktiven Verbindung in Gegenwart
c) mindestens eines thermolatenten anorganischen Zinn-enthaltenden Katalysators,
d) gegebenenfalls weiteren von c) verschiedenen Katalysatoren und/oder Aktivatoren und
e) gegebenenfalls Füllstoffen, Pigmenten, Additiven, Verdickern, Entschäumern und/oder anderen Hilfs- und Zusatzstoffen,
umgesetzt wird, wobei das Verhältnis des Gewichts des Zinns aus Komponente c) und des Gewichts der Komponente a) weniger als 3000 ppm beträgt, wenn Komponente a) ein aliphatisches Polyisocyanat ist und weniger als 95 ppm beträgt, wenn Komponente a) ein aromatisches Polyisocyanat ist,
**dadurch gekennzeichnet, dass** als thennolatente Katalysatoren zyklische Zinnverbindungen der Formel I, II oder III eingesetzt werden: 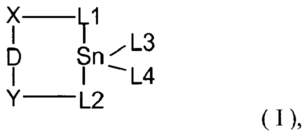 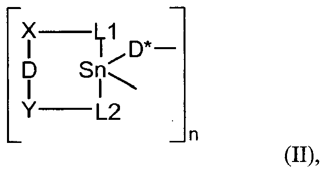 mit n > 1, 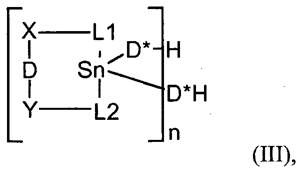 mit n > 1, wobei gilt:
D steht für -O-, -S- oder -N(R1)-
wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 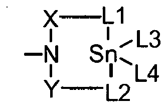 steht, oder R1 und L3 zusammen für -Z-L5- stehen;
D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)-oder ortho-Arylenresten der Formeln 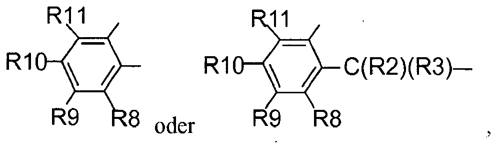 wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, -SC(=S)-, -OS(=O)₂O-, -OS(=O)₂- oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, -OC(=O)R14, -SR15, -OC(=S)R16, -OS(=O)₂OR17, -OS(=O)₂R18 oder -NR19R20, oder L3 und L4 zusammen stehen für -L1-X-D-Y-L2-,
wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

12. Beschichtungsmittel enthaltend die Polyisocyanat-Polyadditionsprodukte gemäß einem der Ansprüche 1 bis 10.

13. Beschichtungen erhältlich unter Verwendung der Beschichtungsmittel gemäß Anspruch 12.

14. Substrate beschichtet mit Beschichtungen gemäß Anspruch 13.

## Claims

1. Polyisocyanate polyaddition products obtainable from
a) at least one aliphatic, cycloaliphatic, araliphatic and/or aromatic polyisocyanate,
b) at least one NCO-reactive compound,
c) at least one thermolatent inorganic tin-containing catalyst,
d) optionally further catalysts and/or activators different from c),
e) optionally fillers, pigments, additives, thickeners, antifoams and/or other auxiliaries and additives,
where the ratio of the weight of tin from component c) to the weight of the component a) is less than 3000 ppm when component a) is an aliphatic polyisocyanate and is less than 95 ppm when component a) is an aromatic polyisocyanate,
**characterized in that** cyclic tin compounds of the formula I, II or III: 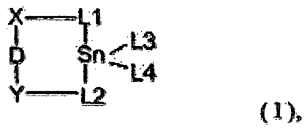 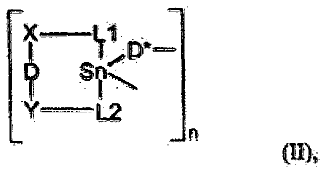 where n > 1, 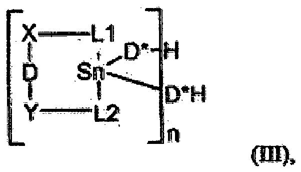 where n > 1, where:
D is -O-, -S- or -N(R1)-
where R1 is a saturated or unsaturated, linear or branched, aliphatic or cycloaliphatic or an optionally substituted, aromatic or araliphatic radical having up to 20 carbon atoms, which may optionally contain heteroatoms from the group consisting of oxygen, sulphur, nitrogen, or is hydrogen or the radical 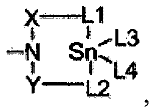 or R1 and L3 are together -Z-L5-;
D* is -O- or -S-;
X, Y and Z are identical or different radicals selected from among alkylene radicals of the formulae -C(R2)(R3)-, -C(R2)(R3)-C(R4)(R5)- or -C(R2)(R3)-C(R4)(R5)-C(R6)(R7)-
or ortho-arylene radicals of the formulae 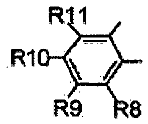 or 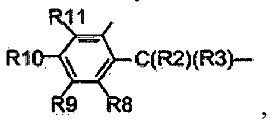 where R2 to R11 are, independently of one another, saturated or unsaturated, linear or branched, aliphatic or cycloaliphatic or optionally substituted, aromatic or araliphatic radicals having up to 20 carbon atoms, which may optionally contain heteroatoms from the group consisting of oxygen, sulphur, nitrogen, or are hydrogen;
L1, L2 and L5 are each, independently of one another, -O-, -S-, -OC(=O)-, -OC(=S)-, -SC(=O)-, -SC(=S)-, -OS(=O)₂O-, -OS(=O)₂- or -N(R12)-,
where R12 is a saturated or unsaturated, linear or branched, aliphatic or cycloaliphatic or an optionally substituted aromatic or araliphatic radical having up to 20 carbon atoms, which may optionally contain heteroatoms from the group consisting of oxygen, sulphur, nitrogen, or is hydrogen;
L3 and L4 are each, independently of one another, -OH, -SH, -OR13, -Hal, -OC(=O)R14, -SR15, -OC(=S)R16, -OS(=O)₂OR17, -OS(=O)₂R18 or -NR19R20, or L3 and L4 together are -L1-X-D-Y-L2-,
where R13 to R20 are, independently of one another, saturated or unsaturated, linear or branched, aliphatic or cycloaliphatic or optionally substituted, aromatic or araliphatic radicals having up to 20 carbon atoms, which may optionally contain heteroatoms from the group consisting of oxygen, sulphur, nitrogen, or are hydrogen,
are used as thermolatent catalysts.

2. Polyisocyanate polyaddition products according to Claim 1, wherein D is -N(R1)- and R1 is hydrogen or an alkyl, aralkyl, alkaryl or aryl radical having up to 20 carbon atoms
or the radical

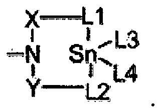

3. Polyisocyanate polyaddition products according to Claim 2, wherein R1 is hydrogen or a methyl, ethyl, propyl, butyl, hexyl, octyl, Ph or CH₃Ph radical or the radical 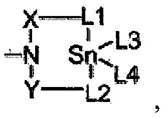 where propyl, butyl, hexyl and octyl include all isomeric propyl, butyl, hexyl and octyl radicals.

4. Polyisocyanate polyaddition products according to any of Claims 1 to 3, wherein D* is -O-.

5. Polyisocyanate polyaddition products according to any of Claims 1 to 4, wherein X, Y and Z are, independently of one another, alkylene radicals of the formula -C(R2)(R3)- or -C(R2)(R3)-C(R4)(R5)- or ortho-arylene radicals of the formula 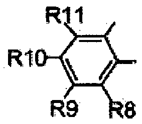 and R2 to R5 are, independently of one another, hydrogen, alkyl, aralkyl, alkaryl or aryl radicals having up to 20 carbon atoms and R8 to R11 are, independently of one another, hydrogen or alkyl radicals having up to 8 carbon atoms.

6. Polyisocyanate polyaddition products according to Claim 5, wherein the radicals R2 to R5 are, independently of one another, hydrogen or alkyl radicals having up to 8 carbon atoms and R8 to R11 are, independently of one another, hydrogen or methyl.

7. Polyisocyanate polyaddition products according to any of Claims 1 to 6, wherein L1, L2 and L5 are each, independently of one another, -N(R12)-, -S-, -SC(=S)-, -SC(=O)-, -OC(=S)-, -O- or -OC(=O)- and R12 is hydrogen or an alkyl, aralkyl, alkaryl or aryl radical having up to 20 carbon atoms.

8. Polyisocyanate polyaddition products according to Claim 7, wherein L1, L2 and L5 are each, independently of one another, -N(H)-, -N(CH₃)-, -N(C₂H₅)-, -N(C₄H₉)-, -N(C₈H₁₇)-, -N(C₆H₅)-, -S-, -SC(=S)-, -SC(=O)-, -OC(=S)-, -O- or -OC(=O)-.

9. Polyisocyanate polyaddition products according to any of Claims 1 to 8, wherein L3 and L4 are each, independently of one another, -OH, -SH, -OR13, -Hal or -OC(=O)R14 and the radicals R13 and R14 have up to 20 carbon atoms.

10. Polyisocyanate polyaddition products according to Claim 9, wherein L3 and L4 are each, independently of one another, Cl-, MeO-, EtO-, PrO-, BuO-, HexO-, OctO-, PhO-, formate, acetate, propanoate, butanoate, pentanoate, hexanoate, octanoate, laurate, lactate or benzoate, where Pr, Bu, Hex and Oct include all isomeric propyl, butyl, hexyl and octyl radicals.

11. Process for preparing the novel polyisocyanate polyaddition products according to Claim 1, in which
a) at least one aliphatic, cycloaliphatic, araliphatic and/or aromatic polyisocyanate is reacted with
b) at least one NCO-reactive compound in the presence of
c) at least one thermolatent inorganic tin-containing catalyst,
d) optionally further catalysts and/or activators different from c) and
e) optionally fillers, pigments, additives, thickeners, antifoams and/or other auxiliaries and additives,
where the ratio of the weight of tin from component c) to the weight of the component a) is less than 3000 ppm when component a) is an aliphatic polyisocyanate and is less than 95 ppm when component a) is an aromatic polyisocyanate,
**characterized in that** cyclic tin compounds of the formula I, II or III: 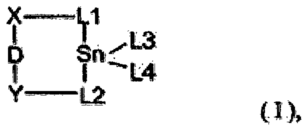 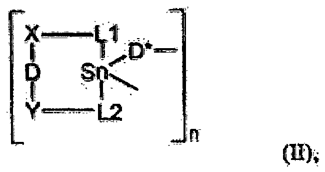 where n > 1, 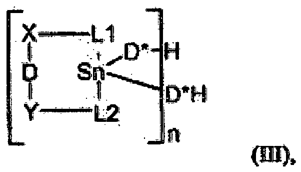 where n > 1,
where:
D is -O-, -S- or -N(R1)-
where R1 is a saturated or unsaturated, linear or branched, aliphatic or cycloaliphatic or an optionally substituted, aromatic or araliphatic radical having up to 20 carbon atoms, which may optionally contain heteroatoms from the group consisting of oxygen, sulphur, nitrogen, or is hydrogen or the radical 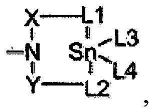 or R1 and L3 are together -Z-L5-;
D* is -O- or -S-;
X, Y and Z are identical or different radicals selected from among alkylene radicals of the formulae -C(R2)(R3)-, -C(R2)(R3)-C(R4)(R5)- or -C(R2)(R3)-C(R4)(R5)-C(R6)(R7)-
or ortho-arylene radicals of the formulae 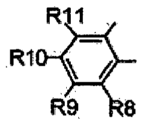 or 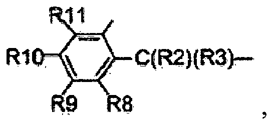 where R2 to R11 are, independently of one another, saturated or unsaturated, linear or branched, aliphatic or cycloaliphatic or optionally substituted, aromatic or araliphatic radicals having up to 20 carbon atoms, which may optionally contain heteroatoms from the group consisting of oxygen, sulphur, nitrogen, or are hydrogen;
L1, L2 and L5 are each, independently of one another, -O-, -S-, -OC(=O)-, -OC(=S)-, -SC(=O)-, -SC(=S)-, -OS(=O)₂O-, -OS(=O)₂- or -N(R12)-,
where R12 is a saturated or unsaturated, linear or branched, aliphatic or cycloaliphatic or an optionally substituted, aromatic or araliphatic radical having up to 20 carbon atoms, which may optionally contain heteroatoms from the group consisting of oxygen, sulphur, nitrogen, or is hydrogen;
L3 and L4 are each, independently of one another, -OH, -SH, -OR13, -Hal, -OC(=O)R14, -SR15, -OC(=S)R16, -OS(=O)₂OR17, -OS(=O)₂R18 or -NR19R20, or L3 and L4 together are -L1-X-D-Y-L2-,
where R13 to R20 are, independently of one another, saturated or unsaturated, linear or branched, aliphatic or cycloaliphatic or optionally substituted, aromatic or araliphatic radicals having up to 20 carbon atoms, which may optionally contain heteroatoms from the group consisting of oxygen, sulphur, nitrogen, or are hydrogen,
are used as thermolatent catalysts.

12. Coating compositions containing the polyisocyanate polyaddition products according to any of Claims 1 to 10.

13. Coatings obtainable using the coating compositions according to Claim 12.

14. Substrates coated with coatings according to Claim 13.

## Revendications

1. Produits de polyaddition de polyisocyanate, pouvant être obtenus à partir de
a) au moins un polyisocyanate aliphatique, cycloaliphatique, araliphatique et/ou aromatique,
b) au moins un composé réactif avec NCO,
c) au moins un catalyseur contenant de l'étain inorganique thermolatent,
d) éventuellement d'autres catalyseurs et/ou activateurs différents de c),
e) éventuellement des charges, des pigments, des additifs, des épaississants, des démousseurs et/ou d'autres adjuvants et additifs,
le rapport entre le poids de l'étain du composant c) et le poids du composant a) étant inférieur à 3 000 ppm lorsque le composant a) est un polyisocyanate aliphatique et inférieur à 95 ppm lorsque le composant a) est un polyisocyanate aromatique, **caractérisé en ce que** des composés d'étain cycliques de formule I, II ou III sont utilisés en tant que catalyseurs thermolatents : 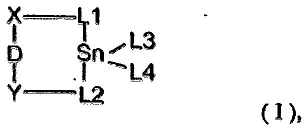 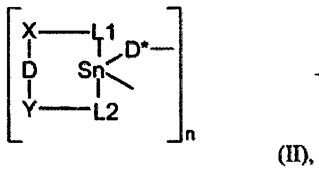 avec n > 1, 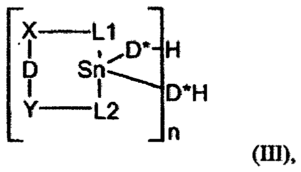 avec n > 1,
dans lesquelles :
D représente -O-, -S- ou -N(R1)-
R1 représentant un radical saturé ou insaturé, linéaire ou ramifié, aliphatique ou cycloaliphatique, ou éventuellement substitué, aromatique ou araliphatique, contenant jusqu'à 20 atomes de carbone, qui peut éventuellement contenir des hétéroatomes de la série oxygène, soufre, azote, ou l'hydrogène, ou le radical 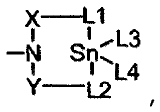 ou R1 et L3 représentent ensemble -Z-L5- ;
D* représente -O- ou -S- ;
X, Y et Z représentent des radicaux identiques ou différents choisis parmi les radicaux alkylène de formule -C(R2)(R3)-, -C(R2)(R3)-C(R4)(R5)- ou-C(R2)(R3)-C(R4)(R5)-C(R6)(R7)- ou des radicaux ortho-
arylène de formule 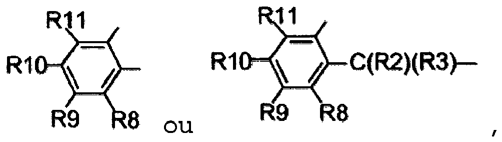 R2 à R11 représentant indépendamment les uns des autres des radicaux saturés ou insaturés, linéaires ou ramifiés, aliphatiques ou cycloaliphatiques, ou éventuellement substitués, aromatiques ou araliphatiques, contenant jusqu'à 20 atomes de carbone, qui peuvent éventuellement contenir des hétéroatomes de la série oxygène, soufre, azote, ou l'hydrogène ;
L1, L2 et L5 représentent indépendamment les uns des autres -O-, -S-, -OC(=O)-, -OC(=S)-, -SC(=O)-, -SC(=S)-, -OS(=O)₂O-, -OS(=O)₂- ou -N(R12)-,
R12 représentant un radical saturé ou insaturé, linéaire ou ramifié, aliphatique ou cycloaliphatique, ou éventuellement substitué, aromatique ou araliphatique, contenant jusqu'à 20 atomes de carbone, qui peut éventuellement contenir des hétéroatomes de la série oxygène, soufre, azote, ou l'hydrogène ;
L3 et L4 représentent indépendamment l'un de l'autre-OH, -SH, -OR13, -Hal, -OC(=O)R14, -SR15, -OC(=S)R16, - OS(=O)₂OR17, -OS(=O)₂R18 ou -NR19R20, ou L3 et L4 représentent ensemble -L1-X-D-Y-L2-,
R13 à R20 représentant indépendamment les uns des autres des radicaux saturés ou insaturés, linéaires ou ramifiés, aliphatiques ou cycloaliphatiques, ou éventuellement substitués, aromatiques ou araliphatiques, contenant jusqu'à 20 atomes de carbone, qui peuvent éventuellement contenir des hétéroatomes de la série oxygène, soufre, azote, ou l'hydrogène.

2. Produits de polyaddition de polyisocyanate selon la revendication 1, dans lesquels D représente -N(R1)-et R1 représente l'hydrogène ou un radical alkyle, aralkyle, alkaryle ou aryle contenant jusqu'à 20 atomes C ou le radical

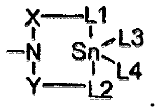

3. Produits de polyaddition de polyisocyanate selon la revendication 2, dans lesquels R1 représente l'hydrogène ou un radical méthyle, éthyle, propyle, butyle, hexyle, octyle, Ph ou CH₃Ph ou le radical 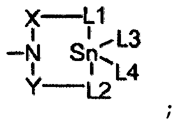 propyle, butyle, hexyle et octyle représentant tous les radicaux propyle, butyle, hexyle et octyle isomères.

4. Produits de polyaddition de polyisocyanate selon l'une quelconque des revendications 1 à 3, dans lesquels D* représente -O-.

5. Produits de polyaddition de polyisocyanate selon l'une quelconque des revendications 1 à 4, dans lesquels X, Y et Z représentent indépendamment les uns des autres des radicaux alkylène de formule -C(R2)(R3)-ou -C(R2)(R3)-C(R4)(R5)- ou des radicaux ortho-arylène de formule 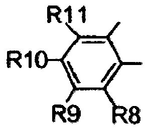 et R2 à R5 représentent indépendamment les uns des autres l'hydrogène, des radicaux alkyle, aralkyle, alkaryle ou aryle contenant jusqu'à 20 atomes C et R8 à R11 représentent indépendamment les uns des autres l'hydrogène ou des radicaux alkyle contenant jusqu'à 8 atomes C.

6. Produits de polyaddition de polyisocyanate selon la revendication 5, dans lesquels les radicaux R2 à R5 représentent indépendamment les uns des autres l'hydrogène ou des radicaux alkyle contenant jusqu'à 8 atomes C et R8 à R11 représentent indépendamment les uns des autres l'hydrogène ou méthyle.

7. Produits de polyaddition de polyisocyanate selon l'une quelconque des revendications 1 à 6, dans lesquels L1, L2 et L5 représentent indépendamment les uns des autres -N(R12)-, -S-, -SC(=S)-, -SC(=O)-,-OC(=S)-, -O- ou -OC(=O)- et R12 représente l'hydrogène ou un radical alkyle, aralkyle, alkaryle ou aryle contenant jusqu'à 20 atomes C.

8. Produits de polyaddition de polyisocyanate selon la revendication 7, dans lesquels L1, L2 et L5 représentent indépendamment les uns des autres -N(H)-, -N(CH₃)-, -N(C₂H₅)-, -N(C₄H₉)-, -N(C₈H₁₇)-, -N(C₆H₅)-, -S-, -SC(=S)-, -SC(=O)-, -OC(=S)-, -O- ou -OC(=O)-.

9. Produits de polyaddition de polyisocyanate selon l'une quelconque des revendications 1 à 8, dans lesquels L3 et L4 représentent indépendamment les uns des autres -OH, -SH, -OR13, -Hal ou -OC(=O)R14 et les radicaux R13 et R14 comprennent jusqu'à 20 atomes de carbone.

10. Produits de polyaddition de polyisocyanate selon la revendication 9, dans lesquels L3 et L4 représentent indépendamment l'un de l'autre Cl-, MeO-, EtO-, PrO-, BuO-, HexO-, OctO-, PhO-, formiate, acétate, propanoate, butanoate, pentanoate, hexanoate, octanoate, laurate, lactate ou benzoate ; Pr, Bu, Hex et Oct représentant tous les radicaux propyle, butyle, hexyle et octyle isomères.

11. Procédé de fabrication des produits de polyaddition de polyisocyanate selon l'invention selon la revendication 1, selon lequel
a) au moins un polyisocyanate aliphatique, cycloaliphatique, araliphatique et/ou aromatique est mis en réaction avec
b) au moins un composé réactif avec NCO, en présence de
c) au moins un catalyseur contenant de l'étain inorganique thermolatent,
d) éventuellement d'autres catalyseurs et/ou activateurs différents de c) et
e) éventuellement des charges, des pigments, des additifs, des épaississants, des démousseurs et/ou d'autres adjuvants et additifs,
le rapport entre le poids de l'étain du composant c) et le poids du composant a) étant inférieur à 3 000 ppm lorsque le composant a) est un polyisocyanate aliphatique et inférieur à 95 ppm lorsque le composant a) est un polyisocyanate aromatique, **caractérisé en ce que** des composés d'étain cycliques de formule I, II ou III sont utilisés en tant que catalyseurs thermolatents : 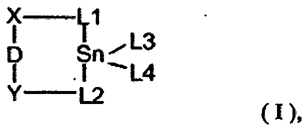 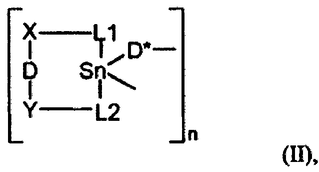 avec n > 1, 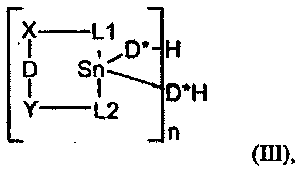 avec n > 1,
dans lesquelles :
D représente -O-, -S- ou -N(R1)-
R1 représentant un radical saturé ou insaturé, linéaire ou ramifié, aliphatique ou cycloaliphatique, ou éventuellement substitué, aromatique ou araliphatique, contenant jusqu'à 20 atomes de carbone, qui peut éventuellement contenir des hétéroatomes de la série oxygène, soufre, azote, ou l'hydrogène, ou le radical 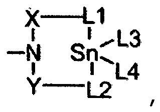 ou R1 et L3 représentent ensemble -Z-L5- ;
D* représente -O- ou -S- ;
X, Y et Z représentent des radicaux identiques ou différents choisis parmi les radicaux alkylène de formule -C(R2)(R3)-, -C(R2)(R3)-C(R4)(R5)- ou-C(R2)(R3)-C(R4)(R5)-C(R6)(R7)- ou des radicaux ortho-
arylène de formule 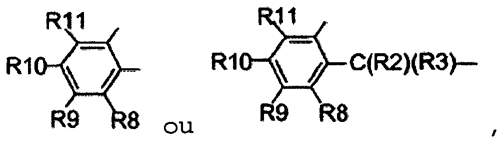 R2 à R11 représentant indépendamment les uns des autres des radicaux saturés ou insaturés, linéaires ou ramifiés, aliphatiques ou cycloaliphatiques, ou éventuellement substitués, aromatiques ou araliphatiques, contenant jusqu'à 20 atomes de carbone, qui peuvent éventuellement contenir des hétéroatomes de la série oxygène, soufre, azote, ou l'hydrogène ;
L1, L2 et L5 représentent indépendamment les uns des autres -O-, -S-, -OC(=O)-, -OC(=S)-, -SC(=O)-, -SC(=S)-, -OS(=O)₂O-, -OS(=O)₂- ou -N(R12)-,
R12 représentant un radical saturé ou insaturé, linéaire ou ramifié, aliphatique ou cycloaliphatique, ou éventuellement substitué, aromatique ou araliphatique, contenant jusqu'à 20 atomes de carbone, qui peut éventuellement contenir des hétéroatomes de la série oxygène, soufre, azote, ou l'hydrogène ;
L3 et L4 représentent indépendamment l'un de l'autre - OH, -SH, -OR13, -Hal, -OC(=O)R14, -SR15, -OC(=S)R16, - OS(=O)₂OR17, -OS(=O)₂R18 ou -NR19R20, ou L3 et L4 représentent ensemble -L1-X-D-Y-L2-,
R13 à R20 représentant indépendamment les uns des autres des radicaux saturés ou insaturés, linéaires ou ramifiés, aliphatiques ou cycloaliphatiques, ou éventuellement substitués, aromatiques ou araliphatiques, contenant jusqu'à 20 atomes de carbone, qui peuvent éventuellement contenir des hétéroatomes de la série oxygène, soufre, azote, ou l'hydrogène.

12. Agents de revêtement contenant les produits de polyaddition de polyisocyanate selon l'une quelconque des revendications 1 à 10.

13. Revêtements pouvant être obtenus en utilisant les agents de revêtement selon la revendication 12.

14. Substrats revêtus avec des revêtements selon la revendication 13.
